Europäisches Patentamt

European Patent Office

Office européen des brevets

(11) Publication number: **0 240 354**
**A1**

## (12) EUROPEAN PATENT APPLICATION

(21) Application number: **87302898.9**

(22) Date of filing: **02.04.87**

(51) Int. Cl.³: **G 06 F 15/16**

(30) Priority: **04.04.86 GB 8608312**

(43) Date of publication of application:
**07.10.87 Bulletin 87/41**

(84) Designated Contracting States:
**AT BE DE ES FR GB IT NL SE**

(71) Applicant: **The British Petroleum Company p.l.c.**
**Britannic House Moor Lane**
**London EC2Y 9BU(GB)**

(72) Inventor: **Mottershead, Christopher John**
**The British Petroleum Company plc Chertsey Road**
**Sunbury-on-Thames Middlesex TW16 7LN(GB)**

(74) Representative: **Ryan, Edward Terrence et al,**
**BP INTERNATIONAL LIMITED, Patents Division Chertsey**
**Road**
**Sunbury-on-Thames Middlesex, TW16 7LN(GB)**

(54) Memory Architecture for multiprocessor computers.

(57) A multiprocessor computer comprises a plurality of identical processing elements, each of which comprises a processor (1), local memory (4), addressable by the processor, and an arbitration unit (3) for controlling access to the local memory from other processing elements. At least one processing element is connected to X neighbours (where X is an integer which is at least 1) for the sharing of data. The memory space addressable by the processor in the processing element is divided into a least X + 1 regions. Addressing different regions of memory space causes data to be accessed in either the local memory or in the memories of neighbouring processing elements.

FIG.1

# MEMORY ARCHITECTURE IN MULTIPROCESSOR COMPUTERS

## Technical Field

The present invention relates to improvements in the memory organisation of multiprocessor computers.

## Background

It has been proposed to improve the speed at which complex data processing can be carried out by dividing the data processing between a plurality of processing elements which simultaneously carry out processing steps. Machines have been proposed in which the same instruction is carried out simultaneously on different data (SIMD - single instruction stream, multiple data stream) or in which different instructions are carried out simultaneously on different data (MIMD - multiple instruction stream, multiple data stream).

For a further discussion of SIMD machines and MIMD machines, reference should be made to Stone et al, "Introduction to Computer Architecture", Science Research Associates, Inc., 1975, pages 327 to 354 (SIMD) and pages 355 to 372 (MIMD).

One arrangement which has been proposed for a multiprocessor comprises a conventional computer which may be termed a control computer or host computer connected to a controller which in turn controls the passage of data and instructions to and from a plurality of independent processing elements. The control computer or host computer is responsible for controlling some peripheral devices such as disk storage, keyboards, printers, etc., and for passing programs and data by way of the controller to the processing elements.

1

The controller is responsible for sending instructions and data to the individual processing elements. Depending on the method by which the individual processing elements are interconnected the controller may be responsible for the transfer of data between individual processing elements.

An important consideration for any system consisting of a plurality of processing elements is the ability to communicate data or messages between processing elements, or to share data between processing elements.

In those systems where control of the system is focused in a controller, there is a path available for communication between processing elements via the controller. This method of communication is indirect, in that the message passes from a processing element to the controller and thence to the receiving processing element. Furthermore only one such message may be routed between processing elements at any one time. This detracts from the parallel nature of such systems and thus from the speed of computation.

Another method that has successfully been used for systems with a plurality of processing elements is to provide each processing element with a data transfer register. Each data transfer register is connected to an interconnection bus which in its turn links the individual data transfer registers on each of the individual processing elements forming a network between processing elements. In such a system, data or messages may be sent from a source processing element to a destination processing element by placing the said data or messages into the data transfer register and then routing the said data or messages through the interconnection network by hopping between data transfer registers. This method of transferring data or messages between processing elements, unlike the previous method using the controller, may be used in parallel across the plurality of processing elements. A disadvantage with this method, however, is the need for special data transfer registers on each processing element within the plurality and the need for an interconnection bus between these data transfer registers. Moreover, this system of data or message passing presents difficulties for data sharing between processing elements. To share data between processing elements, copies of the data must be sent via these registers and the connection bus to the individual processing elements that need to share data. This situation means that individual processing elements do not share data in the strict sense for each processing element has its own copy of the data. Where data is copied, there is always the need to ensure coherence between the various copies and some master copy. Such an arrangement is disclosed in "Interconnection Networks for Large-Scale Parallel Processing", H.J. Siegel, Lexington Books, 1985, pages 14, 18-20.

US 4 325 116 (Kranz et al) discloses a computer system containing two processors and two memories. One of the memories is shared by the two processors. Data placed in this memory by one processor can be retrieved directly from the memory by the other processor.

The two processors of US 4 325 116 are not part of a collection of individual identical processing elements operating in parallel to perform a calculation. The two processors are carrying out different functions.

It would be desirable to provide for data sharing between processing elements in a multiprocessor computer in which a plurality of individual identical processing elements are cooperating to carry out a computation without the need for special registers.

According to the present invention there is provided a multiprocessor computer containing a plurality of identical processing elements and each of said processing elements comprises a processor, local memory addressable by the processor, and an arbitration unit for controlling access to the local memory from other processing elements and
at least one of the processing elements is connected to X neighbours (where X is an integer which is at least 1) for the sharing of data, the memory space addressable by the processor in the processing element is divided into at least X+1 regions, and addressing one of said regions allows data to be accessed in the local memory of the processing element, and addressing each other one of said regions allows data to be accessed in the local memory of a different one of said X neighbours.

The neighbours of a given processing element are the processing elements to which the given processing element is permanently connected so as to allow the given processing element to access the local memories of the connected processing elements. Multiprocessor computers are known in which any one of a plurality of processing elements can be connected to any other processing element by a common bus to which all the processing elements have access. Processing elements which are interconnected only by a bus common to all the processing elements are not neighbours for the purposes of this specification.

Multiprocessor computers are also known in which any one of a plurality of processing elements can be brought into communication with another of the processing elements by a switching network interposed between the processing elements. Such multiprocessor computers pass data between processing elements by sending copies of data through the switching network from one local memory to another. The processing elements do not share access to the same data located in the local memory of one of the processing elements. A first processing element which does not share access with a second processing element to data held in local memory of the first processing element is not a neighbour of the second processing element.

Generally, if a processing element (identified as say A) is a neighbour of another processing element (identified say as B) then B is also a neighbour of A. However it is possible to envisage arrangements in which the processor of A can access the local memory of B, but the processor of B cannot access the local memory of A. In such a situation B is a neighbour of A but A is not a neighbour of B.

Preferably there are a plurality of processing element each of which has a neighbouring processing element and is also the neighbouring processing element of a processing element. It is possible to envisage for example a chain of processing elements each of which can access the local memory of a processing element further down the chain but which cannot access local memory of a processing element further up the chain. Preferably however each processing element which has a neighbouring processing element is itself a neighbouring processing element to the said neighbouring processing element. Thus if a processing element A is a neighbour to processing element B, B is preferably also a neighbour of A.

It is possible to envisage a multiprocessor computer sufficiently small that the total number of processing elements is such that all the processing elements are neighbours.

In general, however, the maximum number of neighbouring processing elements for any given processing element will be less than the total number of processing elements in the computer.

It will be generally convenient for the neighbouring processing elements to be physically adjacent to one another in any enclosure in which they are mounted but this is not essential. The processing elements are conveniently constructed as a single unit e.g. on a single circuit board. Where the memory is on the same circuit board or is otherwise clearly associated with a specific processor then that memory can be considered to be local memory. The memories may be mounted separately from the processors, so that a given memory is not clearly associated physically with a given processor. In such a case the choice of local memory is arbitrary. The address and data connections from each processor to its local memory and to its neighbours are as in a normal uniprocessor. The processors and memories are not connected by a switching network allowing any processor to communicate with any memory e.g. by a packet switching network.

It is not necessary for all the processing elements to be connected to the same number of neighbours. In the interests of having a standard design of processing element it may be convenient to provide for the capability of connection to a given number (X max) of processing elements and to connect at least some processing elements to less than X max neighbours.

The processing elements need not be connected together to give a regular arrangement. However it will generally be preferable to have a regular arrangement of some kind. Thus the processing elements could be connected in the form of a binary tree. In the binary tree the root processing element will have only two neighbours. The processing elements at the end of the tree (the leaves) will have only one neighbour. The other processing elements in the tree will have three neighbours.

The above comments on the number of neighbouring processing elements when the processing elements are connected in a binary tree topology assumes that there is equal access to local memories in both root and leaf directions. If access to the local memories of the two processing elements in the leaf direction is allowed, but not access to the local memory of the processing element in the root direction, then the leaf processing elements have no neighbours for the purposes of this specification because they cannot access the memory of any other processing element. The other processing elements all have two neighbouring processing elements because they can each access the memories of two other processing elements in the leaf direction.

Another preferred connection is in the form of a torus in which each processing element has four neighbours. Yet another possible connection is in the form of a hypercube.

Preferably the memory space addressable on each interconnected processing element is divided into X+2 regions, and the additional region is linked to a common controller such that an address in this additional region accesses memory in the controller. Thus in our copending application         corresponding to International Application PCT/GB 87/00093 (Our Case 6147/6326) a multiprocessor computer is described which operates in SIMD mode and broadcasts instructions to the processing elements from an instruction memory in the controller. By arranging for memory addresses on an individual processing element to access the controller the

ı

processing element can obtain instructions from the controller to be executed in its processor.

Preferably addresses in the additional region of memory mentioned above are not passed directly to the controller. Instead it is preferred to treat all addresses in the relevant range as a single address, which is not itself passed directly to the controller but which causes a circuit to pass a signal to the controller to indicate that the processing element requires data or (more usually) instructions from the controller.

Where the processing elements are connected together in a regular topology it is desirable for the allocation of memory regions to be consistent. Consider the case of a plurality of processing elements, each of which has neighbouring processing elements in topologically distinct positions. It is preferred that all processing elements access the memory of a neighbouring processing element in a given topological position by addresses in the same range of addresses.

Consider a computer configured as a binary tree and with the memory space associated with each processing element divided into regions identified by the labels n0, n1, n2, n3, n4 covering successively higher address ranges. In such a computer it is desirable for say an address in n0 to always access the local memory of the processing element, for an address in n1 to always access the memory of the processing element in the root direction, for an address in n2 to always access the memory of the processing element on the left branch, for an address in n3 to always access the memory of the processing element on the right branch, and for an address in n4 to be associated with the controller.

In the following discussion of the invention the symbol * is used as a multiplication sign and the symbol + is used as a plus sign and neither sign is used to represent the Boolean operators AND or OR.

A general discussion of the application of the invention to a rectangular array of processing elements with end-around connections (a torus) is given below. In such an array all the processing elements have four neighbours.

However, as indicated above, other arrangements are possible. For example the processing elements could be arranged in the form of a binary tree with three neighbours as mentioned above. The same principle of partitioning address space can still be used.

Consider the case of a rectangular array of processing elements consisting of a*b processing elements, under the control of a controller, where (a and b) are positive integers.

The a*b processing elements are laid out in a rectangle of a rows of b columns. An individual processing element from this array has four neighbouring processing elements. These may be given the labels P(N) or North, P(E) or East, P(S) or South, and P(W) or West.

The labels P(N), P(S), P(W) and P(E) have no physical significance and could equally well be replaced by the labels "up", "down", "left", and "right", or "green", "blue", "red" and "yellow". An individual processing element from this array of processing elements may be denoted by $P(i,j)$, where i is the row and j the column in which the processing element lies. The four neighbouring processing elements can be identified as follows:

P(N) is $P(i-1,j)$,

P(E) is $P(i,j+1)$,

P(S) is $P(i+1,j)$, and

P(W) is $P(i,j-1)$.

More rigorously the neighbouring processing elements can be identified as follows:

P(N) is $(P(1+((i-2) \bmod b),j))$

P(E) is $(P(i,1+(j \bmod a)))$

P(S) is $(P(1+(i \bmod b),j))$

P(W) is $(P(i,1+((j-2) \bmod a)))$

The processor in each processing element is capable of addressing memory space in the range h0 to H, where h0 and H represent the lowest and highest addresses addressable by the processor.

Each one of these processing elements, $P(i,j)$, has a local memory, M(i,j). The local memory only takes up part of the total address space of the processor. The local memory may be addressed in the range h0 to h1-1. Moreover, a processor may also address the local memory of its four neighbouring processing elements by using addresses in the ranges h1 to h2-1, h2 to h3-1, h3 to h4-1, or h4 to h5-1, where the first range addresses the local memory of processing element P(N), the second range addresses the local memory of P(E), the third range addresses the local memory of P(S), and the fourth range addresses the local memory of P(W). The controller may be addressed by any of the a*b processing elements using an address of h5 or greater. The memory space addressable by a processor within a processing element is thus divided into X+2 regions (X, the number of neighbouring processing elements, is 4 in this case).

The regions are non-overlapping, but not necessarily contiguous. Using the terminology used above to identify processing elements' memory regions;

addresses in the range h0 to h1-1 correspond to region n0, addresses in the range h1 to h2-1 correspond to region n1,

addresses in the range h2 to h3-1 correspond to region n2, addresses in the range h3 to h4-1 correspond to region n3, addresses in the range h4 to h5-1 correspond to region n4, and addresses in the range h5 to H correspond to region n5 (H is the highest address which can be generated by the processor).

In the specific case of a processor capable of generating hexadecimal addresses in the range 00000 to FFFFF, the local memory of each processing element may have the address range 00000 to 0FFFF, and the local memories of its neighbours may be accessed by hexadecimal addresses in the range 10000 to 1FFFF, 20000 to 2FFFF, 30000 to 3FFFF, and 40000 to 4FFFF for P(N), P(E), P(S) and P(W) respectively. The controller may be accessed by hexadecimal address in the range F0000 to FFFFF, (i.e. an address range which is not contiguous with the address range just mentioned).

Accesses to the local memory, M(i,j), from the processor of processing element, P(i,j), are transmitted via a local bus, B(i,j). All accesses to the memory, M(i,j), are arbitrated by a

:

local address arbitration circuit, D(i,j). In order that D(i,j) should allow access to M(i,j) by the local processor of the processing element, P(i,j), the addresses issued by the local processor of P(i,j) must be in the range assigned to local memory eg hexadecimal 00000 to 0FFFF in the specific example given above.

The processor of processing element P(i,j), may also access the local memories M(N), M(E), M(S), and M(W) of the neighbouring processing elements, via the local bus B(i,j). Accesses to these neighbouring local memories are arbitrated by the corresponding local address arbitration circuits, that is D(N), D(E), D(S), and D(W) respectively. In order that the local processor of P(i,j) may access these neighbouring local memories, the local processor of P(i,j) must use addresses in the appropriate range e.g. addresses in the ranges 10000 to 1FFFF, 20000 to 2FFFF, 30000 to 3FFFF, and 40000 to 4FFFF, respectively in the specific example given above.

In reverse, the local memory, M(i,j), may be accessed by the processors of neighbouring processing elements via addresses placed on their respective local buses which are arbitrated by D(i,j). In order that the processors of processing element. P(N), P(E), P(S), and P(W) may access the local memory M(i,j), these processors will, in the specific example given above, access this memory in the hexadecimal address range 30000 to 3FFFF, 40000 to 4FFFF, 10000 to 1FFFF, or 20000 to 2FFFF, respectively.

When P(i-1,j) access local memory on P(i,j) it is accessing a processing element which is P(S) considered from P(i-1,j). The address used to access the local memory of P(i,j) from P(i-1,j) is thus the address for P(S) namely 30000 to 3FFFF.

By this device, any of the a*b processing elements may share data with their neighbouring processing elements.

The local address arbitration unit, D(i,j), has five input connections, one from the local processor and four from the processors on the neighbouring processing elements, and one output connection to the local memory, M(i,j). Each input accepts addresses in a different region. Inputs accept addresses in regions n0, n1, n2, n3 and n4. When an input accepts an address, it maps the address to a second address which is output to the local memory, M(i,j), thus accessing a physical memory location in the local memory. In the specific example given above, the accepted address is mapped by ignoring the most significant hexadecimal digit of the address.

Thus, for example, if the processor of processing element P(i,j) can access a datum in local memory M(i,j) at hexadecimal address 0123A, then the processor of processing element P(N) can access the same datum in memory M(i,j) at hexadecimal address 3123A, the processor of processing element P(E) can access the same datum in memory M(i,j) at hexadecimal address 4123A, the processor of processing element P(S) can access the same datum in memory M(i,j) at hexadecimal address 1123A, and the processor of processing element P(W) can access the same datum in memory M(i,j) at hexadecimal address 2123A.

The controller is on a global bus, G. Addresses placed on the local bus, B(i,j), may be routed to the global bus via a local to global address mapping circuit. In order that a processing element P(i,j) may address the controller it must place an address greater than or equal to h5 (e.g. hexadecimal F0000 to FFFFF) on the local bus, B(i,j). It may be convenient to arrange that all addresses in the range h5 to H are mapped to a single address eg the local to global address mapping circuits may map an address in the hexadecimal address range F0000 to FFFFF to a single address and furthermore, since only a single address is placed on the global bus, the single address can be replaced by a single signal. Moreover in the preferred embodiment data is not transmitted to the controller, but is only read by the processing elements from the controller. By this means an operation code may be "broadcast" to all processors, P(i,j), when they are operating in SIMD mode.

The arbitration and address mapping circuits required by the present invention may be readily designed by those skilled in the art.

The invention will now be illustrated by reference to the accompanying drawings in which

Figure 1 is a diagrammatic representation of an individual processing element provided with means for connection to four neighbouring processing elements, and

Figure 2 is a diagrammatic representation of an individual processing element connected to four neighbours.

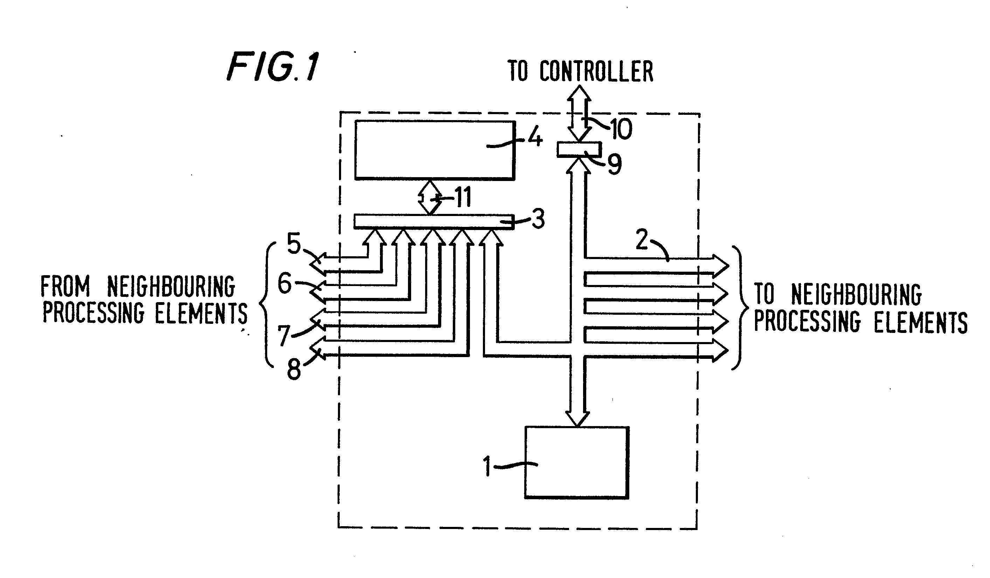

Figure 1 shows the general arrangement of a processing element comprising _inter alia_ a memory address arbitration unit and bus. Additional buses shown in the figure arise from similar buses on neighbouring processing elements in the plurality of processing elements.

The processor 1, which may be any conventional commercially available microprocessor capable of generating hexadecimal addresses in the range 0 to FFFFF is connected to an address/data bus 2. Memory requests by the processor are transmitted via this local bus. The processing element represents one processing element of the plurality of processing elements.

The local bus 2 is also connected to the local address arbitration unit 3, the local to global address mapping unit 9 and to the address arbitration units of the four neighbouring processing elements. Consequently, addresses issued by processor 1 are directed via bus 2 to the local address arbitration units of the neighbouring processing elements.

Conversely, the local address arbitration unit 3, in addition to its connection to the local bus 2, is also connected to the local buses of the four neighbouring processing elements. The function of arbitration unit 3 is to multiport the local memory 4 using different address ranges. The local address arbitration unit 3 may be made from standard components by one skilled in the art. This unit accepts addresses placed on the local bus 2 by the processor 1 in the hexadecimal address range 00000 to 0FFFF allowing access to the local memory 4 in the hexadecimal address range 0000 to FFFF. The unit 3 accepts addresses in the hexadecimal ranges 10000 to 1FFFF, 20000 to 2FFFF, 30000 to 3FFFF, and 40000 to 4FFFF placed on the buses 5, 6, 7, and 8 of the neighbouring processing elements respectively. These addresses are mapped to hexadecimal address range 0000 to FFFF allowing access to the local memory 4.

Item 11 is simply an address/data bus from the local arbitration unit to the local memory.

An address accepted by unit 3 will address data in the local memory 4 at the address identified by the four low order hexadecimal digits of the address presented to unit 3.

The local to global address mapping unit 9 is connected to the local bus 2. Addresses in the range F0000 to FFFFF are mapped by unit 9 into a single signal on global bus 10. This unit may be made from standard components by one skilled in the prior art.

The global bus is an instruction and a data bus that may be accessed simultaneously by any number of processing elements in the plurality and is connected to the controller.

The global bus is used only for read cycles by the processing elements. Processing elements of the plurality use the global bus to receive operation codes for SIMD operation.

This is effected when all the processing elements in the plurality address the global bus simultaneously.

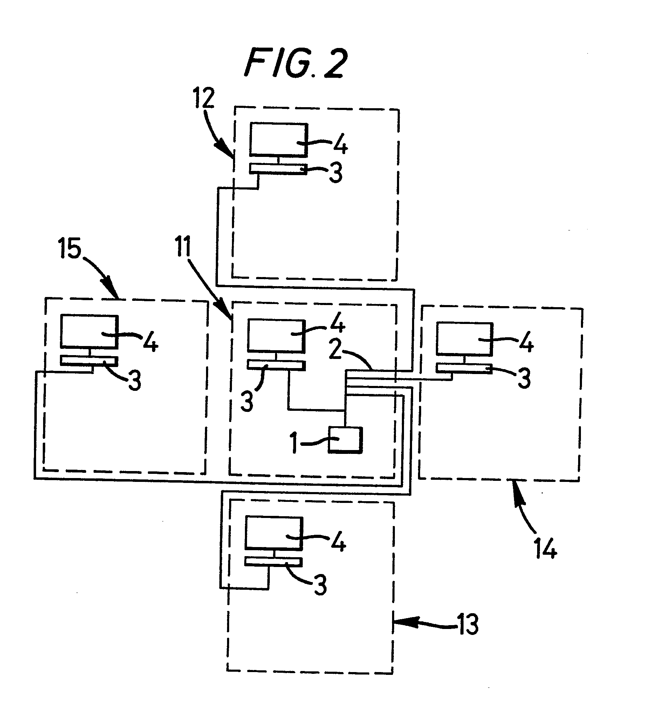

Figure 2 indicates the neighbourhood connections for a single processing element 11 to the arbitration units of its neighbouring processing elements 12,13,14 and 15. Each processing element has four processing elements as neighbours and is further connected to the global bus, and thus the controller.

In general a processing element may be connected to fewer neighbours or the arbitration unit expanded for many neighbour connections, if some other interconnection topology is needed.

:

Claims:

1. A multiprocessor computer containing a plurality of identical processing elements, and each of said processing elements comprises a processor, local memory addressable by the processor, and an arbitration unit for controlling access to the local memory from other processing elements and

at least one of the processing elements is connected to X neighbours (where X is an integer which is at least 1) for the sharing of data, the memory space addressable by the processor in the processing element is divided into at least X+1 regions, and addressing one of said regions allows data to be accessed in the local memory of the processing element, and addressing each other one of said regions allows data to be accessed in the local memory of a different one of said X neighbours.

2. A multiprocessor computer according to claim 1 having a plurality of processing elements each of which has a neighbouring processing element and is also the neighbour of a processing element.

3. A multiprocessor according to claim 2 wherein each processing element which has a neighbouring processing element is itself a neighbouring processing element to the said neighbouring processing element.

4. A multiprocessor computer according to any one of claims 1 to 3 having a controller for controlling the operation of the processing elements and controlling the transfer of data to and from the processing elements wherein the memory space addressable on each interconnected processing element is divided into X+2 regions, and a region of memory space is associated with the controller such that accessing an address in that region of memory space causes the processing element to access memory in the controller.

5. A multiprocessor computer according to claim 4 wherein all addresses within the region of memory space linked to the controller are mapped to a single address, such that a reference to this address causes a circuit to pass a signal to the controller to indicate that the processing element requires data or instructions.

6. A multiprocessor computer according to either of the claims 4 or 5 wherein a processing element which accesses a memory location associated with the controller is caused to operate in SIMD mode with other processing elements which also access an address associated with the controller until the processing element is caused to access an address in a memory location not associated with the controller.

7. A multiprocessor computer according to any one of the preceding claims wherein the processing elements are connected together in a regular topology.

8. A multiprocessor according to claim 7 wherein the processing elements are connected as a binary tree.

9. A multiprocessor computer according to claim 7 wherein the processing elements are connected together as a torus.

10. A multiprocessor according to claim 7 wherein the processing elements are connected as a hypercube.

11. A multiprocessor according to any one of claims 7 to 10 wherein there is a plurality of processing elements each having neighbouring processing elements in topologically distinct positions and all processing elements access the memory of a neighbouring processing element in a given topological position by addresses in the same range of addresses.

12. A multiprocessor computer according to any one of the proceding claim 1 wherein the number of neighbouring processing elements) for any given processing element is constant throughout the plurality of processing elements.

13. A multiprocessor computer according to claim 12 wherein the processing elements each have four nearest neighbours.

FIG.1

TO CONTROLLER

FROM NEIGHBOURING
PROCESSING ELEMENTS

TO NEIGHBOURING
PROCESSING ELEMENTS

# FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 7, no. 121 (P-199)[1266], 25th May 1983; & JP-A-58 39 360 (TOKYO SHIBAURA DENKI K.K.) 08-03-1983 | 1-4 | G 06 F 15/16 |
| Y | Idem | 6-13 | |
| Y | IEEE PROCEEDINGS OF THE 1983 INTERNATIONAL CONFERENCE ON PARALLEL PROCESSING, 23rd-26th August 1983, pages 407-415, IEEE, New York, US; D.L. TUOMENOKSA et al.: "Preloading schemes for the PASM parallel memory system" * Figure 2; page 407, last paragraph - page 408, paragraph 2 * | 6 | |
| | | | TECHNICAL FIELDS SEARCHED (Int. Cl.4) |
| Y | IEEE TRANSACTIONS ON COMPUTERS, vol. C-32, no. 1, January 1983, pages 83-95, IEEE, New York, US; D.A. REED et al.: "Cost - Performance bounds for multimicrocomputer Networks" * Figure 2 * | 7-13 | G 06 F |
| | -/- | | |

The present search report has been drawn up for all claims

| Place of search | Date of completion of the search | Examiner |
|---|---|---|
| THE HAGUE | 24-06-1987 | TIBAUX M.J.P.G. |

## 0240354

European Patent
Office

**EUROPEAN SEARCH REPORT**

Application number

EP 87 30 2898

| | DOCUMENTS CONSIDERED TO BE RELEVANT | | Page 2 |
|---|---|---|---|
| **Category** | Citation of document with indication, where appropriate, of relevant passages | **Relevant to claim** | **CLASSIFICATION OF THE APPLICATION (Int. Cl.4)** |
| A | COMPUTER DESIGN, vol. 18, no. 5, May 1979, pages 181-185, Concord, US; A.D. HIRSCHMAN et al.: "Standard modules offer flexible multiprocessor system design" * Figure 2b; page 184, lines 6-26 * | 1 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 24-06-1987 | TIBAUX M.J.P.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82